# EUROPÄISCHE PATENTSCHRIFT

(11) **EP 1 288 027 B1**
(45) Veröffentlichungstag und Bekanntmachung des Hinweises auf die Patenterteilung: **24.12.2008**
(21) Anmeldenummer: 02011997.0
(22) Anmeldetag: 31.05.2002
(51) Int. Cl.: B60G 7/00

(54) **Lenker für eine Radaufhängung in Kraftfahrzeugen**
Suspension arm for a vehicle
Bras de suspension pour véhicule

(30) Priorität: 13.07.2001 DE 10134107
(43) Veröffentlichungstag der Anmeldung: 05.03.2003
(73) Patentinhaber: AUDI AG, 85045 Ingolstadt (DE)
(72) Erfinder: Krüger, Frieder, 85101 Lenting (DE); Brandl, Hans Jürgen, 86706 Lichtenau (DE); Müller, Hugo, 86701 Rohrenfels (DE)

(56) Entgegenhaltungen:
- EP-A- 0 721 855
- DE-A- 19 705 588
- FR-A- 1 359 271
- US-A- 3 860 353

## Beschreibung

Die Erfindung betrifft einen Lenker für eine Radaufhängung in Kraftfahrzeugen, mit zumindest einem Gummi-Metall-Hülsengelenk, gemäß dem Oberbegriff des Patentanspruches 1.

Bei Radaufhängungen in Kraftfahrzeugen bestimmen sich in bekannter Weise die fahrdynamischen Eigenschaften und Kennwerte wie beispielsweise Momentanzentrum, Rollachse, etc. nach der Lage der Lenker und der Schwenkachsen der korrespondierenden Gelenke. Sollen bei einer Baureihe eines Kraftfahrzeuges unterschiedliche fahrdynamische Eigenschaften verwirklicht werden, so sind entsprechend unterschiedliche Lenker und/oder Anschlusselemente wie Radträger, Konsolen, etc. erforderlich.

Das Dokument EP 0721855 zeigt einen Lenker für eine Radaufhängung, der eine Exzentrizität umfasst.

Aufgabe der Erfindung ist es, einen Lenker der gattungsgemäßen Art vorzuschlagen, der quasi ohne baulichen Mehraufwand unterschiedliche Kinematiken ermöglicht.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angeführt.

Erfindungsgemäß wird vorgeschlagen, bei Verwendung eines Gummi-Metall-Hülsengelenkes mit einer entsprechenden Innenhülse deren Befestigungsbohrung zur rotationssymmetrischen Außenkontur desachsiert anzuordnen. Dies ermöglicht ohne baulichen Mehraufwand und in der einfachsten Ausführung, eines der Lenkergelenke oder beide bei einem Lenker in einer Desachsierungsposition und bei einem anderen (gleichen) Lenker in einer weiteren, unterschiedlichen Desachsierungsposition einzubauen und damit zwei unterschiedliche kinematische Wirkungslinien (Verbindungsgerade durch die sich aus den rotationssymmetrischen, gummielastischen Büchsen der Gelenke ableitenden Gelenkmitten) zu schaffen, die bei entsprechender Konfiguration der Radaufhängung beispielsweise zwei unterschiedlich hohe Momentanzentren der ansonsten gleichen Radaufhängung definieren.

In Weiterbildung der Erfindung sind unter Verwendung eines einheitlichen Lenkers dessen eines oder beide Gelenke so desachsiert, dass sich bei der Montage in einer ersten Position und durch Umschlag (z. B. 180 Grad Drehung um die Längsachse eines stabförmigen Lenkers) in eine zweite Position zwei definiert unterschiedliche Wirkungslinien ergeben. Der Vorteil dieser Ausführung liegt darin, dass die Gelenke einheitlich in einer definierten Desachsierungsposition vormontiert werden können und lediglich die Lage des Lenkers beim Einbau in die Radaufhängung zu beachten ist. Der Lenker kann dazu eine Kennzeichnung tragen, um Zuordnungsfehler auszuschließen.

Ein Ausführungsbeispiel der Erfindung ist im folgenden mit weiteren Einzelheiten näher erläutert. Die schematische Zeichnung zeigt einen stabförmigen Lenker für eine Radaufhängung in einem Kraftfahrzeug mit zwei an dessen Enden angeordneten Gummi-Metall-Hülsengelenken.

Der stabförmige Lenker 10 z. B. aus Stahl oder Aluminium weist an seinen Enden zwei Lenkeraugen 12,14 auf, in die jeweils ein Gummi-Metall-Hülsengelenk 16 (im folgenden als Gelenk 16 bezeichnet) fest eingesetzt ist.

Die identischen Gelenke 16 setzen sich jeweils zusammen aus einer metallischen Außenhülse 18 (die ggf. auch entfallen kann), einer darin z. B. durch Vulkanisation eingesetzten, rotationssymmetrischen und gummielastischen Büchse 20 und einer metallischen Innenhülse 22 mit einer definierten Desachsierung e der durchgehenden Befestigungsbohrung 24.

Der Lenker 10 wird beispielsweise an seinem einen Ende über eine nicht dargestellte Befestigungsschraube durch Befestigen der Innenhülse 22 an einem Radträger der nicht dargestellten Radaufhängung des Kraftfahrzeuges und an seinem anderen Ende mit einer weiteren Befestigungsschraube und durch Befestigen der entsprechenden Innenhülse 22 an einer nicht dargestellten ortsfesten Konsole am Aufbau des Kraftfahrzeuges angelenkt und kann über einen begrenzten Schwenkwinkel geschwenkt werden.

Die durchgezogene Linie 26 bildet die unveränderliche Verbindungsgerade durch die durch die Befestigungsschrauben gebildeten Befestigungspunkte, die aufgrund der Desachsierung e jedoch nicht in den Gelenkmitten liegen.

Die Gelenkmitten bzw. deren Verbindungsgeraden sind in der einen gezeichneten Position des Lenkers 10 durch die gestrichelte Linie 28 und durch Umschlag (Pfeil 30) des Lenkers 10 um 180 Grad um dessen Längsachse in einer weiteren Position durch die strichpunktierte Linie 32 gebildet.

Die Desachsierung e ist dabei - wie ohne weiteres ersichtlich - etwa senkrecht zur Längsachse 26 des Lenkers 10 und im Bezug zu den Gelenkmitten gegeneinander versetzt ausgerichtet, sowie maßlich so definiert, dass sich in den zwei Montagepositionen des Lenkers 10 die definierten, aus den Gelenkmitten sich ergebenden kinematischen Wirklinien 28 bzw. 32 einstellen.

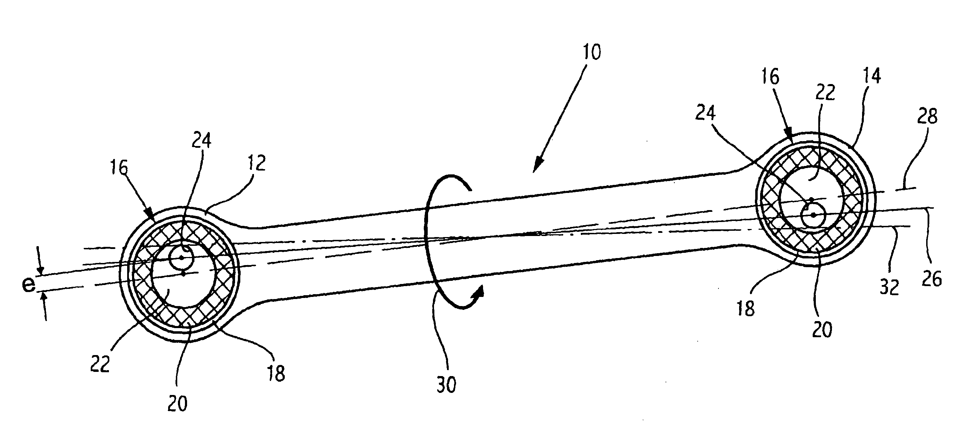

## Patentansprüche

1. Lenker für eine Radaufhängung in Kraftfahrzeugen, mit zumindest einem Gummi-Metall-Hülsengelenk mit einer rotationssymmetrischen, gummielastischen Büchse, die eine Innenhülse mit einer Befestigungsbohrung umschließt, **dadurch gekennzeichnet, dass** die Befestigungsbohrung (24) zur rotationssymmetrischen Außenkontur der Innenhülse (22) desachsiert angeordnet ist.

2. Lenker nach Anspruch 1, **dadurch gekennzeichnet, dass** an seinen beiden Enden Gummi-Metall-Hülsengelenke (16) mit desachsierten Befestigungsbohrungen (24) vorgesehen sind.

3. Lenker nach Anspruch 1 oder 2, **dadurch gekennzeichnet, dass** die Desachsierung (e) der Befestigungsbohrungen (24) so ausgerichtet ist, dass bei einer Montage des Lenkers (10) in einer Radaufhängung in einer ersten Position oder durch Umschlagen in einer Position zwei verschiedene Lenkerkinematiken verwirklichbar sind.

4. Lenker nach Anspruch 3, **dadurch gekennzeichnet, dass** bei horizontaler Anordnung des Lenkers (10) die Befestigungsbohrungen (24) der Gummi-Metall-Hülsengelenke (16) vertikal und einander entgegengesetzt desachsiert sind.

## Claims

1. A suspension arm for a motor vehicle, comprising at least one rubber-metal sleeve-type joint incorporating a dynamically balanced elasticated liner which surrounds an inner sleeve incorporating a fixing hole, **characterised in that** the fixing hole (24) is arranged axially offset with respect to the dynamically balanced external contour of the inner sleeve (22).

2. The suspension arm according to claim 1, **characterised in that** rubber-metal sleeve-type joints (16) with axially offset fixing holes (24) are provided at both its ends.

3. The suspension arm according to claim 1 or 2, **characterised in that** the axial offset (3) of the fixing holes (24) is aligned in such a way that by mounting the arm (10) in a suspension system in a first position or by turning it over, it is possible to bring about two different kinematic configurations of the suspension arm (10) in one position.

4. The suspension arm according to claim 3, **characterised in that** when the arm (10) is arranged horizontally, the fixing holes (24) of the rubber-metal sleeve-type joint (16) are axially offset vertically and are opposed to one another.

## Revendications

1. Bras de suspension pour véhicules automobiles, avec au moins une articulation à douille caoutchouc-métal avec une bague élastique en caoutchouc à symétrie de rotation, qui entoure une douille intérieure avec un perçage de fixation, **caractérisé en ce que** le perçage de fixation (24) est disposé de manière désaxée par rapport au contour extérieur à symétrie de rotation de la douille intérieure (22).

2. Bras selon la revendication 1, **caractérisé en ce qu'**au niveau de ses deux extrémités, des articulations à douille caoutchouc-métal (16) avec perçages de fixation (24) desaxés sont prévues.

3. Bras selon la revendication 1 ou 2, **caractérisé en ce que** le désaxement (e) des perçages de fixation (24) est orienté de telle sorte que deux cinématiques différentes de bras peuvent être réalisées lors d'un montage du bras (10) dans une suspension dans une première position ou par retournement dans une position.

4. Bras selon la revendication 3, **caractérisé en ce que** dans le cas d'un agencement horizontal du bras (10), les perçages de fixation (24) des articulations à douille caoutchouc-métal (16) sont désaxés de manière verticale et de manière opposée les uns aux autres.
